# EUROPEAN PATENT SPECIFICATION

(11) **EP 4 302 966 B1**
(45) Date of publication and mention of the grant of the patent: **15.10.2025**
(21) Application number: 22183173.8
(22) Date of filing: 05.07.2022
(51) Int. Cl.: B29C 51/26, B29C 51/22, B29C 51/44, B29C 37/00, B29L 31/00, B65G 47/82, B65G 47/90, B65G 57/16

(54) **STACKER FOR A THERMOFORMING MACHINE AND RELATED STACKING PROCESS**
STAPLER FÜR EINE THERMOFORMMASCHINE UND ZUGEHÖRIGES STAPELVERFAHREN
EMPILEUR POUR MACHINE DE THERMOFORMAGE ET PROCÉDÉ D'EMPILAGE ASSOCIÉ

(43) Date of publication of application: 10.01.2024
(73) Proprietor: WM Thermoforming Machines SA, 6855 Stabio (CH)
(72) Inventor: BURATTIN GOTTI, Riccarda, 6855 Stabio (CH); D'ADDA, Maurizio, 6855 Stabio (CH)
(74) Representative: M. Zardi & Co S.A.

(56) References cited:
- EP-B1- 1 025 978
- EP-B1- 3 274 151
- DE-U1- 202004 011 250
- US-A1- 2002 018 709

## Description

### Field of the invention

The present invention is in the field of thermoforming processes and machines particularly for the production of plastic items.

### Prior art

Thermoforming is widely used for mass production of plastic items, particularly for small disposable items like plastic trays or cups.

The thermoforming process, wherein the items are thermoformed from a sheet of the plastic material, is typically carried out in a press. Each working cycle of the press normally produces a batch of numerous items. The press comprises a lower mould and an upper mould and, at each cycle, opens to allow extraction of the thermoformed items.

A challenging task of the process is how to extract the thermoformed items from the open press and transfer the items to an output device, which is generally an output conveyor to feed the items to a subsequent process step such as finishing or storage.

A common approach is to stack temporarily the items in a container. A single container however would slow down the process because, during the transfer to the output device, it would not be available to receive new items from the press. A modern thermoforming press is a fast device, performing a thermoforming cycle in around 1 second; if stacking is not available and the press is forced to wait, the production capacity is affected.

It is known, therefore, to provide two containers which alternate in the role of stacking container, so that when one container is delivering the items to the output device, the other can continue to receive newly-thermoformed items from the press.

The items are removed from the press and transferred to a container by a suitable transfer device. A common system for opening the press is to provide a tiltable half-mould, for example the lower mould. Due to this tilting movement, when the press is open the items must be extracted along an inclined direction relative to the vertical. For this reason, the transfer device is conventionally controlled according to two axes wherein a first axis provides an axial displacement to remove the items from the press; a second axis provides a rotation between an inclined position for extracting the items from the press, and a vertical or substantially vertical position to release the items into a container.

A brilliant solution to the issue of continuous stacking is given by EP 3 274 151 which discloses two containers vertically arranged one above the other, wherein the items are discharged in the upper container and a stack formed in the upper container can be fully transferred into the lower container. Accordingly, the upper container can continue to receive items while the lower container feeds the output device. Despite being satisfactory in most cases, this system may have a limited storing capacity due to the vertical alignment of the containers, particularly when the items have a considerable height and/or a considerable stacking pitch in the vertical direction. Under such circumstance, the upper container may quickly reach saturation.

Further relevant state of the art is disclosed in EP1025978B1, DE20 2004011250U1 and US2002018709A1.

The latter discloses :
A stacker for a thermoforming machine comprising:a transfer device arranged to extract thermoformed items from a press of said thermoforming machine;a first container and a second container configured for storing the thermoformed items;an output device ;the stacker having a first stacking location for the first container and a second stacking location for the second container, wherein said first stacking location and second stacking location are aligned along a transversal direction;wherein each of the first container and second container is displaceable between a stacking condition, wherein the container is in the respective stacking location and is arranged to receive and store items released by the transfer device, and a discharge condition wherein the container is moved away from the stacking location andis arranged to deliver the items to the output device;wherein the transfer device is controlled independently according to three axes including:a axis of translation along an axial direction of the transfer device;a axis of a transverse translation along a direction which is parallel to said direction of alignment of the first container and second container, so that the transfer device, by the transverse translation can reach selectively a first discharge position of the first stacking location to load the thermoformed items in the first container, or a second discharge position of the second stacking location to load the thermoformed items in the second container, and a corresponding method.

### Summary of the invention

The invention aims to overcome the aforementioned limitations and drawbacks of the prior art. Particularly, the invention aims to a novel system to allow uninterrupted stacking of the thermoformed items while a previously formed stack is being transferred to an output device.

The aim is reached with a stacker for thermoformed items according to claim 1.

The invention applies the principle of two stacking containers, each having a stacking location. The two containers alternate between a stacking phase, during which they receive the thermoformed items withdrawn from the thermoforming press, by means of a transfer device, and a discharge phase during which they release the items to an output device, such a conveyor. When one of the containers is performing the discharge phase, the other can perform the stacking phase, so that items can be continuously withdrawn from the press and stacked in one of the containers.

Each container has a stacking location. The stacking locations of the containers are aligned side by side horizontally.

A noticeable feature of the present invention is the transfer device being controllable according to an additional axis of translation, in order to reach selectively one of the two different stacking locations of the containers. The transfer device is controlled to align with the location of the current stacking container, so that the items removed from the thermoforming press can be loaded selectively into the first container or the second container. The transfer device travels like a shuttle between the thermoforming press and the current stacking location.

A related advantage is an increased freedom in the design of the containers. Particularly, the containers can be designed to store a stack of items with a considerable height. Also, it is not necessary to move each container to a shared stacking location because each container has its own stacking location. The loading into the first container or second container is selected by the additional control of the transfer device. A further advantage of the invention is that the items need not be transferred from one container to another during the stacking process.

An aspect of the invention is also a thermoforming process according to the claims.

### Description of the invention

The stacker of the invention includes a first container and a second container. Each container is displaceable between a stacking position and a discharge position. In the stacking position, the container is in a respective stacking location and is arranged preferably vertically or substantially vertically, to receive items released by the transfer device, so that the items are stacked in the container. In the discharge position, the container is arranged to discharge the stacked items to the output device.

The stacker has a first stacking location for the first container and a second stacking location for the second container. The first stacking location and the second stacking location are different locations and are aligned next to each other.

The transfer device is controlled independently according to at least three axes. The term "axis" denotes a degree of freedom of the transfer device, typically controlled by a respective motor or actuator, preferably an electric motor. Particularly, according to the common usage in the field of motion control, the term "axis" may denote a linear displacement according to a given direction or a rotation around an axis.

The multi-axis control of the transfer device includes:
a control according to a first axis which results in a translation of the transfer device according to a first direction, which is an axial direction;
a control according to a second axis which results in a rotation of the transfer device, for alignment with the press or with the stacking container;
control according to a third axis which results in a translation of the transfer device according to a second direction.

The translation of the first axis is an axial translation along an axial direction of the transfer device, which has a first orientation or a second orientation based on the rotation given by the second axis. The translation of the first axis is generally performed to extract the items from the press. If expedient, a translation according to said first axis can be performed also when releasing the items in the container.

Said first orientation, for removing the items from the press, is typically inclined relative to the vertical, to match an inclined plane of the press. Said second orientation, for loading the items into a container, is preferably vertical to facilitate loading. In a preferred embodiment the containers are top-loading containers.

The translation of said third axis is performed along a transverse direction which is parallel to the direction of alignment of the first container and second container, and is also parallel to the axis of the rotation controlled by the second axis.

By means of said third axis of transverse translation, the transfer device can reach selectively a first discharge position above the first stacking location or a second discharge position above the second stacking location. Accordingly, the transfer device can be controlled to load items into the first container or the second container, when the container is located in its stacking location.

The ability to load selectively the first container or the second container is provided by an additional degree of freedom (third axis) of the transfer device. Depending on the container which is instantly in the stacking condition (current stacking container), the transfer device travels to the appropriate location, namely the first stacking location or the second stacking location.

In a preferred embodiment the transfer device is part of a pick-and-place assembly. Said assembly may also include:
a support including a linear guide extended along the direction of said transverse translation;
a slider which is slidable relative to said guide, the transfer device being associated to said guide, so that the transfer device can move relative to the support together with the slider;
the support being rotatable along a longitudinal axis to perform the rotation/inclination of the transfer device.

Each of the first container and second container may include a stack follower which is displaceable according to an axial direction of the container. Said stack follower is configured to support the base of the stack. **It** is moved downward during the formation of the stack, so that new items can be deposited on top of the container, and it can be moved upward to discharge the items from the container.

The control of the position of said stack follower can be regarded as a fourth axis in the stacking process, which is controlled in synchronicity with the three axes of the transfer device. For example, at each transfer cycle the support is moved downward by a predetermined stacking pitch.

Preferably, the stack follower remains always in contact with the items of the base layer of the stack during the loading process and during the delivery of the items to the output device. A related advantage is an increased precision in the formation of stack and subsequent delivery of the items to the output device. As stated above, the stack follower may be regarded as a fourth controlled axis in the process and it can be said that this fourth axis does not abandon the stack during the entire handling process.

The stacker may include a fifth axis to move the container between the stacking location and a discharge location close to the output device. Preferably, said fifth axis cooperates with the fourth axis during the discharge process. The fourth axis may control the delivery of items to the output device in combination with a fifth axis which controls the position of the container relative to the output device.

By controlling the above mentioned fourth axis and fifth axis, rows of items from the stack can be individually transferred to the output conveyor, one after the other.

Preferably said fifth axis advances the container stepwise relative to the output device, so that the stack follower (fourth axis) can transfer individual rows of items (one row at a time) from the container to the output device.

Particularly preferably, said fifth axis performs both the steps of: translation between the stacking location and the discharge location, and step-by-step displacing the container relative to the output device during the discharge of the items.

Each container has a respective fourth axis to control the position of the stack follower and a respective fifth axis to move the container between the stacking location and the discharge location. Accordingly, the overall system is controlled by means of seven axes, namely the three axes of the transfer device plus two axes for each container.

Said output device is preferably an output conveyor. The output conveyor may have a transport plane which is inclined relative to horizontal. In such a case, each of the first container and second container is inclinable so that, when in the discharge position, the container and the items stacked therein can be aligned with the transport plane of the conveyor.

Particularly preferably, said output device is a conveyor having a transport direction which is parallel to the direction of the transverse translation of the third axis of the transfer device.

The first container and the second container may be realized structurally according to various embodiments of the known art. They are preferably configured as baskets. The containers may be configured to accommodate the items in a matrix of vertical rows, including suitable spacers between the rows.

The transfer device may include a vacuum system operable to retain and release the thermoformed items.

It should be noted that details of the components such as the containers or the transfer device are not essential for the purpose of the invention and may be realized according to known technique.

The stacker according to the invention may include a control system arranged to control a stacking process during which thermoformed items are removed from the thermoforming press and loaded into a target container, which is alternately the first container or the second container.

The control system may be configured to control the position of the transfer device according to said three axes to perform steps of extraction of the thermoformed items from the press and positioning of the transfer device above the current stacking container.

In a preferred embodiment the control system is further configured to control a stack follower, which is associated with the container, according to a fourth axis, wherein at each loading cycle, said stack follower is moved downward relative to a loading axis of the container by a stacking pitch. The control system may additionally control the position of the containers according to a fifth axis as above described, thus managing the seven axes of the stacker.

The stacker described above may be a stand-alone equipment suitable to interface with a thermoforming press, or may be an integral part of a thermoforming machine including the press and the stacker.

A thermoforming process according to the invention includes preferably the following steps:
items are produced by thermoforming in a thermoforming press, the items are extracted from the press, temporarily stacked in a container and transferred to an output conveyor;
a first container and a second container alternate between a stacking phase, during which thermoformed items extracted from the thermoforming press are stacked in the container in one or more working cycles until a target stack is formed, and a discharge phase during which the items are removed from the container and transferred to an output device;
during the stacking phase, the thermoformed items are transferred from the thermoforming press to the container by means of a transfer device;
when in the stacking phase, the first container and the second container are in a stacking location, the stacking location of the second container being next to the stacking location of the first container according to a transverse direction;
the items are selectively stacked in the first container or in the second container by moving the transfer device according to said transverse direction, so that the transfer device, during the stacking phase, travels between an extraction position which is aligned with the press, and a discharge position which is selectively above the stacking location of the first container or the stacking location of the second container.

### Description of the figures

The invention is now elucidated in greater detail with reference to a preferred embodiment illustrated in the figures.
Fig. 1 is a scheme of a side view of a stacker according to an embodiment of the invention.
Fig. 2 illustrates the stacker of Fig. 1 seen from above, in a condition with both containers in the respective stacking location.
Fig. 3 illustrates a detail of one of the containers during the transfer of items to an output device such as a conveyor.
Fig. 4 is a scheme of a thermoforming press.

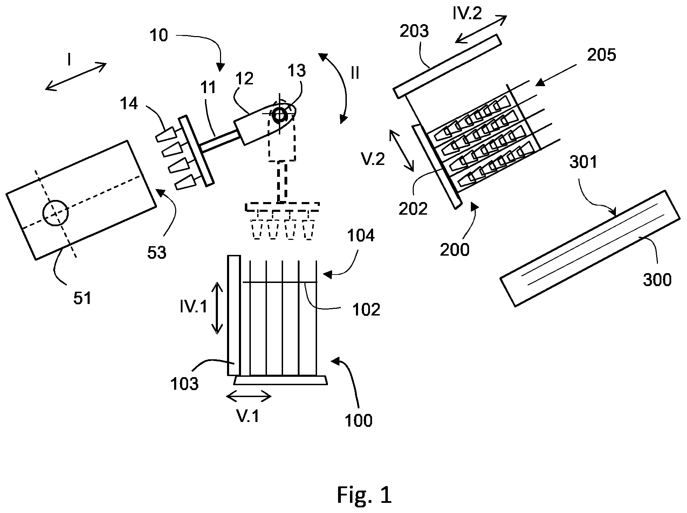

Figs. 1-2 illustrate schematically a stacker arranged to pick thermoformed items A from a lower mould 51 of a thermoforming press and stack the items into containers represented by baskets 100, 200. Once a desired number of items is stored in a basket, the items are transferred from the loaded basket to an output conveyor 300.

The thermoformed items A can be for example disposable items like cups or similar.

The thermoformed items are removed by a transfer device 10 equipped with vacuum pickers 14. Typically, the pickers 14 are disposed in a matrix-like arrangement corresponding to thermoforming seats in the mould 51, so that a corresponding batch of items is processed at each cycle of the device 10.

The stacker includes a first basket 100 and an identical second basket 200. Each of the baskets 100, 200 alternately performs the function of receiving the items released by the device 10, or delivering the stacked items to the conveyor 300.

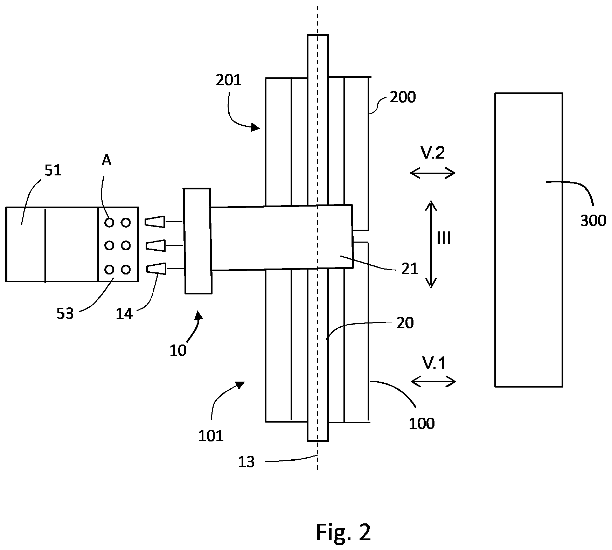

Each basket 100, 200 has a respective stacking location 101, 201 where the basket can be positioned to receive the items from the device 10. Said locations 101, 201 are aligned in a transverse direction as seen in Fig. 2. Each basket 100, 200 can be moved away from its stacking location 101 or 201, to reach a discharge location suitable to feed the conveyor 300.

Fig. 1 illustrates the first basket 100 in the stacking location to receive the items from the transfer device 10, and the basket 200 in the discharge location to deliver the items to the conveyor 300.

The device 10 is controllable according to three axes **I, II** and **III.**

The first axis **I** provides an axial translation provided for example by a rod 11 extendable or retractable relative to a housing 12. This axis **I** is typically used for extraction of the items from the mould 51.

The second axis **II** is a rotation around an axis 13 perpendicular to the plane of Fig. 1 so that the entire device 10 can be aligned with the half-mould 51 or with the container 100 (as shown in dotted lines). Particularly an inclination of the device 10 allows to align the axis **I** perpendicular to a top surface 53 of the lower mould 51.

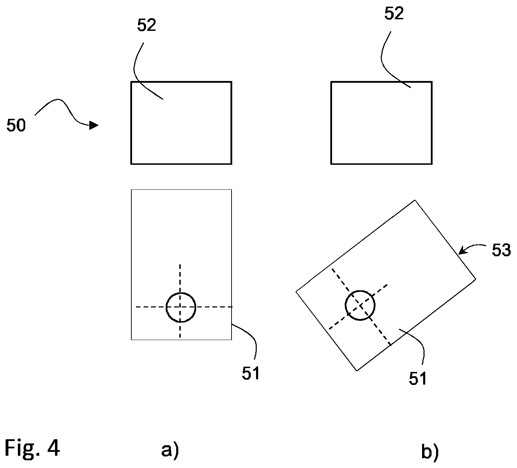

Said top surface 53 is inclined when the press is open. Fig. 4 shows a press 50 including an upper mould 52 and the lower mould 51. Fig. 4 a) illustrates the moulds aligned for the thermoforming process; the lower mould 51 inclines when the press is open as in Fig. 4 b) to facilitate extraction of the items.

The third axis **III** (Fig. 2) provides a translation of the device 10 according to a transverse direction, which is parallel to said axis 13 (rotation controlled by the second axis **II**) and is also the direction of alignment of the first stacking location 101 and second stacking location 201.

The control according to said third axis **III** allows the device 10 to reach a position above the location 101 or above the location 201. Consequently, the device 10 can release the thermoformed items in the basket 100, when said basket is positioned in its stacking location 101, or in the basket 200 when positioned in the location 201.

When one basket 100 or 200 is in the stacking location, the other basket can feed the conveyor 300, so that the stacker is always able to receive items from the press and the work cycle of the press is not affected by the stacking process.

The basket 100 include a stack follower 102 arranged to translate according to a loading axis **IV.1** of the basket 100. Similarly, the basket 200 include a stack follower 202 arranged to translate according to a loading axis **IV.2** of the basket 200. Additionally, the basket 100 has an axis **V.1** for displacement between the stacking location 101 and a discharge location near the conveyor 300 and the basket 200 similarly has an axis **V.2** for displacement between the stacking location 201 and another discharge location near the conveyor 300.

Each basket has a respective fourth axis and fifth axis. The system includes axes **IV.1, V.1** of the first basket 100 and **IV.2, V.2** of the second basket 200.

The process of transferring the items from the press to the conveyor 300 is governed by the seven axes as above introduced, namely the axes **I, II, III** of the transfer device 10, the axes **IV.1, V.1** of the basket 100 and the axes **IV.2** and **V.2** of the basket 200.

The stack follower 102, 202 can assist both the loading of items and formation of the stack, and the evacuation of the items. Each follower 102, 202 travels along a guide member 103, 203 which is associated with the basket 100, 200. The travelling of the follower 102, 202 along its guide member 103, 203 implements the above mentioned axis **IV.1** or **IV.2.**

The stack follower may be fork-shaped including for example projections extending into each row of the container.

Referring to Fig. 1, the follower 102 supports a base layer of the stack and is controlled by axis **IV.1** to move downward at each loading cycle, so that the entire stack is lowered by a suitable pitch (stacking pitch) within the basket 100 at each loading cycle performed by the device 10. Consequently, the batch of items is always received at a top layer 104 of the basket 100.

During the discharge phase, performed by the basket 200 of Fig. 1, the follower 202 moves upward with axis **IV.2** to expel the items from the basket 200, so that they are deposited on the conveyor 300. Additionally, the basket 200 moves according to a fifth axis **V.2** allowing the follower 202 to expel one axial row of items, e.g. row 205, at a time. Here it can be seen how the axes **IV.1** and **V.2** cooperate for controlled discharge of items to the conveyor 300.

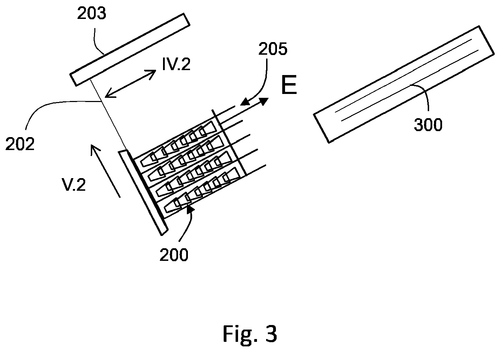

Fig. 3 illustrates further the position of the basket 200 for release of a first row 205 according to the direction E. By moving the basket 200 according to the axis **V.2,** the follower 202 can subsequently expel the other rows of items in the stack.

As illustrated, the conveyor 300 has a transport plane 301 which is preferably inclined relative to the vertical direction. Correspondingly, the basket in the discharge location is inclined around a rotation fulcrum to align with the conveyor 300.

A preferred embodiment for the multi-axis transfer device 10 is represented in Fig. 2.

The transfer device 10 is part of a pick-and-place assembly which includes said transfer device and further includes a support 20 including a linear guide extended along the axis 13. The assembly also includes a slider 21 which is slidable relative to said guide, the transfer device 10 being associated to said slider 21, so that the transfer device can move relative to the support (control axis **III**) together with the slider. The support 20 is also rotatable along the axis 13 to perform the required inclination of the device 10.

The stacking process can be summarized as follows.

The items are extracted from the lower mould 51 of the press by the device 10, moving according to the axis **I**. Once loaded with the items, the device 10 rotates according to axis **II** and travels according to axis **III** to reach the current loading basket, for example the basket 100 in the location 101. The items are released in the basket 100 and the corresponding follower 102 is lowered by one stacking pitch, so that the top layer 104 of the basket is ready to receive another batch of items.

Once a desired depth of the stack is reached, or the basket 100 is fully loaded, said basket 100 is transferred to the discharge location near the output conveyor 300, by moving according to the axis **V.1.** The discharge of items to the conveyor 300 is performed as above described.

The stacking of items continues with the second basket 200. The device 10 accordingly will be controlled with axis **III** to move above the respective location 201. Once fully loaded, the basket 200 is transferred to the discharge location; in the meantime, the basket 100, now empty, returns to the location 101 so that the stacking process continues uninterrupted.

## Claims

1. A stacker for a thermoforming machine comprising:
a transfer device (10) arranged to extract thermoformed items (A) from a press of said thermoforming machine;
a first container (100) and a second container (200) configured for storing the thermoformed items;
an output device (300);
the stacker having a first stacking location (101) for the first container and a second stacking location (201) for the second container, wherein said first stacking location and second stacking location are aligned along a transversal direction;
wherein each of the first container (100) and second container (200) is displaceable between a stacking condition, wherein the container (100, 200) is in the respective stacking location (101, 201) and is arranged to receive and store items released by the transfer device (10), and a discharge condition wherein the container is moved away from the stacking location and
is arranged to deliver the items to the output device (300);
wherein the transfer device (10) is controlled independently according to three axes including:
a first axis (I) of translation along an axial direction of the transfer device;
a second axis (II) of rotation of the transfer device (10) between a first orientation suitable for extraction of the items from the press and a second orientation for releasing the items in one of said containers;
a third axis (III) of a transverse translation along a direction which is parallel to said direction of alignment of the first container and second container, and is also parallel to the axis of said rotation of the transfer device;
so that the transfer device (10), by the transverse translation according to said third axis (III), can reach selectively a first discharge position above the first stacking location (101) to load the thermoformed items in the first container (100), or a second discharge position above the second stacking location (201) to load the thermoformed items in the second container (200).

2. A stacker according to claim 1 including a pick-and-place assembly which includes said transfer device, wherein said pick-and-place assembly also includes:
a support (20) including a linear guide extended along the direction of said transverse translation of third axis;
a slider (21) which is slidable relative to said guide, the transfer device being associated to said slider, so that the transfer device can move relative to the support together with the slider to perform said translation of third axis (III);
the support (20) being rotatable along a longitudinal axis to perform the rotation of said second axis (II).

3. A stacker according to claim 1 or 2 wherein each of the first container (100) and second container (200) includes a respective stack follower (103, 203) which is displaceable according to an axial direction of the container, wherein said follower can be moved downward during the stacking phase to support the base of the stack while following the stacking of the items, and can be moved upward to discharge the items from the container.

4. A stacker according to claim 3 wherein each container (100, 200) is controlled by a fourth axis (IV.1, IV.2) to control the translation of the stack follower (103, 203) relative to the container, and a fifth axis (V.1, V.2) to control the position of the container and the associated stack follower, and wherein: during the delivery of the items to the output device, the translation of the stack follower to expel the items from the container is controlled with the respective fourth axis in conjunction with the fifth axis of the container providing a stepped advancement of the container relative to the output device.

5. A stacker according to claim 4, said fifth axis (V.1, V.2) being also used to move the container between the stacking location and the discharge position.

6. A stacker according to any of claims 1 to 5 wherein said output device (300) is an output conveyor having a transport plane (301) which is inclined relative to the horizontal plane, each of the first container and second container being inclinable so that, when in the discharge position, a loading axis of the container can be aligned with the transportation plane of the conveyor.

7. A stacker according to any of the previous claims wherein said output device is a conveyor having a transport direction which is parallel to the direction of the transverse translation of said third axis (III).

8. A stacker according to any of the previous claims wherein the first container and the second container are configured as baskets.

9. A stacker according to any of the previous claims wherein the transfer device (10) includes a vacuum system operable to retain and release the thermoformed items.

10. A stacker according to any of the previous claims including a control system arranged to control a stacking process during which thermoformed items are removed from the thermoforming press and loaded into a current stacking container, which is alternately the first container or the second container, wherein:
the control system is configured to control the position of the transfer device according to said three axes to perform steps of extraction of the thermoformed items from the press and positioning of the transfer device above the current stacking container;
the control system being further configured to control the stack follower of said current stacking container according to a fourth axis, wherein at each loading cycle, the stack follower is moved downward, along a loading axis of the container, by a stacking pitch.

11. A thermoforming machine including a thermoforming press and a stacker according to any of the previous claims.

12. A thermoforming process using the stacker according to of any of the claims 1-10, wherein items are produced by thermoforming in a thermoforming press, the items are extracted from the press, temporarily stacked in a container and transferred to an output device (300) such as a conveyor, wherein:
a first container (100) and a second container (200) alternate between a stacking phase, during which thermoformed items extracted from the thermoforming press are stacked in the container in one or more working cycles until a desired stack of items is completed, and a discharge phase during which the items are removed from the container and transferred to said output device;
during the stacking phase, the thermoformed items are transferred from the thermoforming press to the container by means of a transfer device (10);
when in the stacking phase, the first container and the second container are in a stacking location (101, 201), the stacking location of the second container being next to the stacking location of the first container according to a transverse direction;
wherein the items are stacked in the current stacking container, which is alternately the first container or the second container, by moving the transfer device (10) according to said transverse direction, so that the transfer device, during the stacking phase, travels between an extraction position which is aligned with the press, and a discharge position which is selectively above the stacking location of the first container or above the stacking location of the second container.

13. A thermoforming process according to claim 12, which is performed with a stacker according to any of claims 1 to 10, or in a thermoforming machine according to claim 11.

## Patentansprüche

1. Ein Stapler für eine Thermoformmaschine, aufweisend:
eine Übergabevorrichtung (10), die eingerichtet ist, um thermogeformte Gegenstände (A) aus einer Presse der Thermoformmaschine zu entnehmen;
einen ersten Behälter (100) und einen zweiten Behälter (200), der für die Lagerung der thermogeformte Gegenstände eingerichtet ist;
eine Ausgabevorrichtung (300);
wobei der Stapler mit einem ersten Stapelplatz (101) für den ersten Behälter und einem zweiten Stapelplatz (201) für den zweiten Behälter eingerichtet ist, wobei der erste Stapelplatz und der zweite Stapelplatz entlang einer Querrichtung ausgerichtet sind;
wobei der erste Behälter (100) und der zweite Behälter (200) jeweils zwischen einer Stapelposition, in welcher sich der Behälter (100, 200) an dem jeweiligen Stapelplatz (101, 201) befindet und so angeordnet ist, dass er von der Übergabevorrichtung (10) übergebene Gegenstände aufnimmt und lagert, und einer Entladeposition, in welcher der Behälter von dem Stapelplatz wegbewegt und so angeordnet ist, dass die Gegenstände an die Ausgabevorrichtung (300) abgegeben werden können, verschiebbar sind;
wobei die Übergabevorrichtung (10) unabhängig voneinander gemäß drei Achsen gesteuert wird, wobei:
eine erste Achse (|) einer Verschiebung entlang einer axialen Richtung der Übergabevorrichtung entspricht;
eine zweite Achse (II) eine Drehachse der Übergabevorrichtung (10) zwischen einer ersten Ausrichtung, die für die Entnahme der Gegenstände aus der Presse geeignet ist, und einer zweiten Ausrichtung zum Freigeben der Gegenstände in einen der genannten Behälter ist;
eine dritte Achse (III) einer Querverschiebung entlang einer Richtung, die parallel zur genannten Ausrichtung des ersten Behälters und des zweiten Behälters entspricht und ebenfalls parallel zu der Drehachse der Übergabevorrichtung ist;
so dass die Übergabevorrichtung (10) durch die Querverschiebung gemäß der dritten Achse (III) selektiv eine erste Entladeposition oberhalb des ersten Stapelplatzes (101) erreichen kann, um die thermogeformten Gegenstände in den ersten Behälter (100) zu laden, oder eine zweite Entladeposition oberhalb des zweiten Stapelplatzes (201), um die die thermogeformten Gegenstände in den zweiten Behälter (200) zu laden.

2. Stapler nach Anspruch 1 mit einer Aufnahme- und Ablagebaugruppe, die die Übergabevorrichtung umfasst, wobei die Aufnahme- und Ablagebaugrupp weiter umfasst:
eine Halterung (20), die eine Linearführung umfasst, die entlang der Richtung der Querverschiebung der dritten Achse ausgerichtet ist;
einen Schlitten (21), der relativ zu der Linearführung verschiebbar ist, wobei die Übergabevorrichtung dem Schlitten zugeordnet ist, so dass sich die Übergabevorrichtung relativ zu der Halterung zusammen mit dem Schlitten bewegen kann, um die Verschiebung der dritten Achse (III) durchzuführen; wobei die Halterung (20) um eine Längsachse drehbar ist, um die Drehung gemäß der zweiten Achse (II) durchzuführen.

3. Stapler nach Anspruch 1 oder 2, wobei jeweils der erste Behälter (100) und der zweite Behälter (200) einen jeweils einen Stapelverschieber (103, 203) aufweisen, der entsprechend einer axialen Richtung des Behälters verschiebbar ist, wobei dieser Verschieber während der Stapelphase nach unten bewegt werden kann, um die Basis eines Stapels zu stützen und dem Stapeln der Gegenstände während des Stapelns zu folgen, und nach oben bewegt werden kann, um die Gegenstände aus dem Behälter zu entladen.

4. Stapler nach Anspruch 3, wobei jeder Behälter (100, 200) gemäß einer vierten Achse (IV.1, IV.2) gesteuert wird, um die Verschiebung des Stapelverschiebers (103, 203) relativ zu dem Behälter zu steuern, und gemäß einer fünfte Achse (V.1, V2), um die Position des Behälters und des zugehörigen Stapelverschiebers zu steuern, und wobei während der Entladung der Gegenstände an die Ausgabevorrichtung, die Verschiebung des Stapelverschiebers zum Abgeben der Gegenstände aus dem Behälter mit der jeweiligen vierten Achse in Verbindung mit der fünften Achse des Behälters gesteuert wird, wodurch ein stufenweises Vorschieben des Behälters relativ zur Ausgabevorrichtung erreicht wird.

5. Stapler nach Anspruch 4, wobei die fünfte Achse (V1, V2) auch zum Bewegen des Behälters zwischen dem Stapelplatz und der Entladeposition verwendet wird.

6. Stapler nach einem der Ansprüche 1 bis 5, wobei die Ausgabevorrichtung (300) ein Ausgabeförderer mit einer Transportebene (301) ist, die relativ zur horizontalen Ebene geneigt ist, wobei jeweils der erste und der zweite Behälter neigbar sind, so dass in der Entladeposition eine Ladeachse des Behälters mit der Transportebene des Förderers ausgerichtet werden kann.

7. Stapler nach einem der vorhergehenden Ansprüche, wobei die Ausgabevorrichtung ein Förderband mit einer Transportrichtung ist, die parallel zur Richtung der Querverschiebung der dritten Achse (III) ist.

8. Stapler gemäß einem der vorhergehenden Ansprüche, wobei der erste Behälter und der zweite Behälter als Körbe eingerichtet sind.

9. Stapler nach einem der vorhergehenden Ansprüche, wobei die Übergabevorrichtung (10) ein Vakuumsystem umfasst, das zum Halten und Freigeben der thermogeformten Gegenstände bedienbar ist.

10. Stapler nach einem der vorhergehenden Ansprüche, umfassend ein Steuerungssystem, das zur Steuerung eines Stapelvorgangs eingerichtet ist, bei dem thermogeformte Gegenstände aus der Presse der Thermoformmaschine entnommen und in einen bestimmten Stapelbehälter geladen werden, der abwechselnd der erste Behälter oder der zweite Behälter ist,
wobei das Steuerungssystem ist so konfiguriert, dass es die Position der Transfervorrichtung gemäß den drei Achsen steuert, um Schritte der Entnahme der thermogeformten Gegenstände aus der Presse und die Positionierung der Transfervorrichtung über dem bestimmten Stapelbehälter durchzuführen;
wobei das Steuersystem ferner so konfiguriert, dass es den Stapelverschieber des bestimmten Stapelbehälters entsprechend einer vierten Achse steuert, wobei bei jedem Ladezyklus der Stapelverschieber entlang einer Ladeachse des Behälters um einen Stapelabstand nach unten bewegt wird.

11. Thermoformmaschine mit einer Presse und einem Stapler gemäß einem der vorhergehenden Ansprüche.

12. Thermoformverfahren, welches den Staplers nach einem der Ansprüche 1 bis 10 verwendet, wobei Gegenstände durch Thermoformen in einer Thermoformpresse hergestellt werden und wobei die Gegenstände aus der Presse entnommen, vorübergehend in einem Behälter gestapelt und zu einer Ausgabevorrichtung (300), wie z. B. einem Förderband, transportiert werden, wobei
ein erster Behälter (100) und ein zweiter Behälter (200) zwischen einer Stapelphase, in der thermogeformte Gegenstände, die aus der Thermoformpresse entnommen werden, in dem Behälter in einem oder mehreren Arbeitszyklen gestapelt werden, bis ein gewünschter Stapel von Gegenständen abgeschlossen ist, und einer Entleerungsphase, in der die Gegenstände aus dem Behälter entnommen und zu der Ausgabevorrichtung übertragen werden, wechseln;
wobei während der Stapelphase die thermogeformten Gegenstände mittels einer Übergabevorrichtung (10) von der Thermoformpresse in den Behälter überführt werden; wenn sich in der Stapelphase der erste Behälter und der zweite Behälter an einem Stapelplatz (101, 201) befinden, wobei der Stapelplatz des zweiten Behälters neben dem Stapelplatz des ersten Behälters in Querrichtung liegt;
wobei die Gegenstände in dem bestimmten Stapelbehälter, der abwechselnd der erste Behälter oder der zweite Behälter ist, gestapelt werden, indem die Übergabevorrichtung (10) entsprechend der Querrichtung bewegt wird, so dass die Übergabevorrichtung während der Stapelphase zwischen einer Entnahmeposition, die mit der Presse ausgerichtet ist, und einer Auswurfposition, die selektiv über dem Stapelplatz des ersten Behälters oder über dem Stapelplatz des zweiten Behälters liegt, fährt.

13. Thermoformverfahren nach Anspruch 12, das mit einem Stapler nach einem der Ansprüche 1 bis 10 oder in einer Thermoformmaschine nach Anspruch 11 durchgeführt wird.

## Revendications

1. Empileur pour une machine de thermoformage comprenant :
un dispositif de transfert (10) disposé pour extraire des articles thermoformés (A) d'une presse de ladite machine de thermoformage ;
un premier conteneur (100) et un second conteneur (200) configurés pour entreposer les articles thermoformés ;
un dispositif de sortie (300) ;
l'empileur comprenant un premier emplacement d'empilage (101) pour le premier conteneur et un second emplacement d'empilage (201) pour le second conteneur, dans lequel lesdits premier et second emplacements d'empilage étant alignés selon une direction transversale ;
dans lequel chacun du premier conteneur (100) et du second conteneur (200) est déplaçable entre une condition d'empilage, dans laquelle le conteneur (100, 200) est dans l'emplacement d'empilage respectif (101, 201) et est disposé pour recevoir et entreposer des articles libérés par le dispositif de transfert (10), et une condition de décharge dans laquelle le conteneur est déplacé hors de l'emplacement d'empilage et est disposé pour livrer les articles au dispositif de sortie (300) ;
dans lequel le dispositif de transfert (10) est commandé indépendamment selon trois axes comprenant :
un premier axe (I) de translation le long d'une direction axiale du dispositif de transfert ;
un second axe (II) de rotation du dispositif de transfert (10) entre une première orientation adaptée à l'extraction des articles de la presse et une seconde orientation pour la libération des articles dans l'un desdits conteneurs ;
un troisième axe (III) de translation transversale le long d'une direction qui est parallèle à ladite direction d'alignement du premier conteneur et du second conteneur, et est également parallèle à l'axe de ladite rotation du dispositif de transfert ;
de sorte que le dispositif de transfert (10), par la translation transversale selon ledit troisième axe (III), peut atteindre sélectivement une première position de décharge au-dessus du premier emplacement d'empilage (101) pour charger les articles thermoformés dans le premier conteneur (100), ou une seconde position de décharge au-dessus du second emplacement d'empilage (201) pour charger les articles thermoformés dans le second conteneur (200).

2. Empileur selon la revendication 1 comprenant un ensemble de préhension et de pose qui comprend ledit dispositif de transfert, dans lequel ledit ensemble de préhension et de pose comprenant également :
un support (20) comprenant un guide linéaire étendu le long de la direction de ladite translation transversale du troisième axe ;
un coulisseau (21) qui est coulissant par rapport audit guide, le dispositif de transfert étant associé audit coulisseau, de sorte que le dispositif de transfert peut se déplacer par rapport au support conjointement avec le coulisseau pour réaliser ladite translation du troisième axe (III) ;
le support (20) étant rotatif le long d'un axe longitudinal pour réaliser la rotation dudit second axe (II).

3. Empileur selon la revendication 1 ou 2 dans lequel chacun du premier conteneur (100) et du second conteneur (200) comprend un suiveur d'empilement respectif (103, 203) qui est déplaçable selon une direction axiale du conteneur, dans lequel ledit suiveur pouvant être déplacé vers le bas pendant la phase d'empilage pour soutenir la base de l'empilement tout en suivant l'empilage des articles, et pouvant être déplacé vers le haut pour décharger les articles du conteneur.

4. Empileur selon la revendication 3 dans lequel chaque conteneur (100, 200) est commandé par un quatrième axe (IV.1, IV.2) pour commander la translation du suiveur d'empilement (103, 203) par rapport au conteneur, et un cinquième axe (V.1, V.2) pour commander la position du conteneur et du suiveur d'empilement associé, et dans lequel : pendant la livraison des articles vers le dispositif de sortie, la translation du suiveur d'empilement pour expulser les articles du conteneur est commandée par le quatrième axe respectif conjointement avec le cinquième axe du conteneur fournissant une avancée par paliers du conteneur par rapport au dispositif de sortie.

5. Empileur selon la revendication 4, ledit cinquième axe (V.1, V.2) étant également utilisé pour déplacer le conteneur entre l'emplacement d'empilage et la position de décharge.

6. Empileur selon l'une quelconque des revendications 1 à 5 dans lequel ledit dispositif de sortie (300) est un convoyeur de sortie comprenant un plan de transport (301) qui est incliné par rapport au plan horizontal, chacun du premier conteneur et du second conteneur étant inclinable de sorte que, lorsqu'il est en position de décharge, un axe de chargement du conteneur peut être aligné avec le plan de transport du convoyeur.

7. Empileur selon l'une quelconque des revendications précédentes dans lequel ledit dispositif de sortie est un convoyeur ayant une direction de transport qui est parallèle à la direction de la translation transversale dudit troisième axe (III).

8. Empileur selon l'une quelconque des revendications précédentes dans lequel le premier conteneur et le second conteneur sont configurés comme des paniers.

9. Empileur selon l'une quelconque des revendications précédentes dans lequel le dispositif de transfert (10) comprend un système de vide apte à retenir et à libérer les articles thermoformés.

10. Empileur selon l'une quelconque des revendications précédentes comprenant un système de commande disposé pour commander un processus d'empilage pendant lequel des articles thermoformés sont retirés de la presse de thermoformage et chargés dans un conteneur d'empilage actif, qui est alternativement le premier conteneur ou le second conteneur, dans lequel :
le système de commande est configuré pour commander la position du dispositif de transfert selon lesdits trois axes pour réaliser des étapes d'extraction des articles thermoformés de la presse et de positionnement du dispositif de transfert au-dessus du conteneur d'empilage actif ;
le système de commande étant en outre configuré pour commander le suiveur d'empilement dudit conteneur d'empilage actif selon un quatrième axe, dans lequel à chaque cycle de chargement, le suiveur d'empilement est déplacé vers le bas, le long d'un axe de chargement du conteneur, d'un pas d'empilage.

11. Machine de thermoformage comprenant une presse de thermoformage et un empileur selon l'une quelconque des revendications précédentes.

12. Procédé de thermoformage utilisant l'empileur selon l'une quelconque des revendications 1 à 10, dans lequel des articles sont produits par thermoformage dans une presse de thermoformage, les articles sont extraits de la presse, temporairement empilés dans un conteneur et transférés vers un dispositif de sortie (300) tel qu'un convoyeur, dans lequel :
un premier conteneur (100) et un second conteneur (200) alternent entre une phase d'empilage, pendant laquelle des articles thermoformés extraits de la presse de thermoformage sont empilés dans le conteneur en un ou plusieurs cycles de travail jusqu'à ce qu'une pile désirée d'articles soit complétée, et une phase de décharge pendant laquelle les articles sont retirés du conteneur et transférés vers ledit dispositif de sortie ;
pendant la phase d'empilage, les articles thermoformés sont transférés de la presse de thermoformage vers le conteneur au moyen d'un dispositif de transfert (10) ;
lorsqu'ils sont en phase d'empilage, le premier conteneur et le second conteneur sont dans un emplacement d'empilage (101, 201), l'emplacement d'empilage du second conteneur étant à côté de l'emplacement d'empilage du premier conteneur selon une direction transversale ;
dans lequel les articles sont empilés dans le conteneur d'empilage actif, qui est alternativement le premier conteneur ou le second conteneur, en déplaçant le dispositif de transfert (10) selon ladite direction transversale, de sorte que le dispositif de transfert, pendant la phase d'empilage, se déplace entre une position d'extraction qui est alignée avec la presse, et une position de décharge qui est sélectivement au-dessus de l'emplacement d'empilage du premier conteneur ou au-dessus de l'emplacement d'empilage du second conteneur.

13. Procédé de thermoformage selon la revendication 12, qui est réalisé avec un empileur selon l'une quelconque des revendications 1 à 10, ou dans une machine de thermoformage selon la revendication 11.
